# FASCICULE DE BREVET EUROPEEN

(11) **EP 3 753 901 B1**
(45) Date de publication et mention de la délivrance du brevet: **20.10.2021**
(21) Numéro de dépôt: 20180418.4
(22) Date de dépôt: 17.06.2020
(51) Int. Cl.: C01B 7/09, B01D 61/44, B01D 3/14, B01D 3/36

(54) **PROCEDE DE PREPARATION D'ACIDE BROMHYDRIQUE A PARTIR DE DECHETS A BASE DE SOLUTION AQUEUSE DE SELS DE BROMURES**
VERFAHREN ZUR HERSTELLUNG VON BROMWASSERSTOFFSÄURE AUS ABFÄLLEN BESTEHEND AUS EINER WÄSSRIGEN LÖSUNG VON BROMSALZEN
METHOD FOR PREPARING HYDROBROMIC ACID FROM WASTE MADE OF AN AQUEOUS SOLUTION OF BROMIDE SALTS

(30) Priorité: 17.06.2019 FR 1906458
(43) Date de publication de la demande: 23.12.2020
(73) Titulaire: Tredi, 01150 Saint-Vulbas (FR)
(72) Inventeur: BERTEIGNE, Michel, 01120 LA BOISSE (FR)
(74) Mandataire: Ernest Gutmann - Yves Plasseraud S.A.S.

(56) Documents cités:
- WO-A1-95/32155
- WO-A1-99/32397
- DE-A1- 19 850 398
- US-A- 3 752 883
- YANXIN WEI ET AL: "Treatment of simulated brominated butyl rubber wastewater by bipolar membrane electrodialysis", SEPARATION AND PURIFICATION TECHNOLOGY, ELSEVIER SCIENCE, AMSTERDAM, NL, vol. 80, no. 2, avril 2011 (2011-04), pages 196-201, XP028237882, ISSN: 1383-5866, DOI: 10.1016/J.SEPPUR.2011.04.003 [extrait le 2011-05-17]

## Description

### Domaine technique de l'invention

L'invention se rapporte au domaine de l'utilisation et de la purification de déchets industriels en vue de la préparation d'acide bromhydrique (HBr) de qualité technique industrielle.

En particulier, l'invention concerne un procédé de préparation d'acide bromhydrique à partir de déchets à base de solution aqueuse de sels de bromures comprenant des contaminants organiques.

L'utilisation du procédé pour l'obtention directe d'acide bromhydrique à partir desdits déchets ainsi que pour la valorisation des ions bromures par leur conversion en acide bromhydrique sont également des objets de la présente invention.

### Etat de la technique antérieure

Les sels de bromures sont historiquement utilisés par l'industrie en vue de la production de brome. La synthèse se base sur la réaction de KUBIERSCHKY selon :

*Cl*₂ + 2*Br^{―}* → 2*Cl^{―}* + *Br*₂ (1)

Cette réaction se fait en phase aqueuse avec une extraction en phase vapeur (stripping) du brome formé.

A ce stade le brome peut être utilisé en tant que tel ou peut donner lieu à la synthèse d'acide bromhydrique par combustion à l'hydrogène selon :

*Br*₂ + *H*₂ → *2HBr* *(*2*)*

L'acide bromhydrique (HBr) ainsi que le Brome (Br₂) sont des intermédiaires de synthèse qui interviennent soit directement dans des réactions d'oxydation, d'alkylation ou de condensation en synthèse organique soit indirectement par la synthèse de bromure d'alkyl avec réaction avec des alcools ou des alcènes. L'acide bromhydrique est également utilisé en chimie minérale pour la synthèse de bromure métallique. A titre d'exemple, on peut citer le bromure de zinc, qui est utilisé notamment dans les forages pétroliers.

Cette réaction de KUBIERSCHKY présente des inconvénients. En effet, la réaction (1) se fait classiquement à partir d'eau de mer présentant des teneurs très faibles de bromures. Dans le cas par exemple d'un ancien site de production français, à Port de Bouc, les saumures de bromures étaient issues de la mer Méditerranée avec une concentration en bromures de l'ordre de 40 ppm. La production d'une tonne de brome nécessitait donc 25 000 tonnes d'eau de mer qui, suite au traitement au chlore étaient intégralement rejetées dans le milieu. Pour une production de 10 000 t/an, la masse d'eau mise en jeu, tant en approvisionnement qu'en rejet, était de 250 millions de m³/an, soit 0,25 km³/an. A titre de comparaison d'échelle, le lac de Constance représente 48 km³, soit 192 années de production. La puissance de pompage mise en œuvre est de 100 MW pour une production de 10 000 tonnes de brome/an, sachant qu'une puissance de 100 MW représente 10 % de la puissance d'un réacteur nucléaire. Afin d'augmenter la teneur en ions bromures dans la saumure de départ, des déchets industriels aqueux à base de bromures pouvaient être utilisés. Certaines sociétés disposaient donc d'une autorisation préfectorale leur permettant de réceptionner des déchets de saumures bromurées dans cet objectif. Néanmoins les normes de rejet ayant évolué, cette pratique a progressivement disparu à l'exception des déchets ne présentant que peu de résiduel polluant. La réaction (2) présente également des inconvénients car la destruction de brome n'est pas totale impliquant de fait la présence de brome libre dans l'acide bromhydrique obtenu. Cette présence de brome confère une coloration jaune à l'acide bromhydrique, ce qui le rend impropre à l'utilisation dans l'industrie pour laquelle une coloration inférieure à 200 APHA, voire 100 APHA, est une exigence.

Une seconde approche de synthèse de l'acide bromhydrique repose sur la conversion de sels de bromures par l'acide sulfurique selon :

*NaBr* + *H*₂*SO₄ → HBr* + *NaHSO*₄ (3)

Cette synthèse a été décrite par exemple dans les brevets US1,379,731 et US2,705,670 ainsi que dans la demande de brevet US2004/0067192.

Cette voie de synthèse (3) présente également des inconvénients et est très peu utilisée puisqu'elle ne représente qu'au plus 1 % de la production/régénération de l'acide bromhydrique mondiale. Cette voie de synthèse est très sensible à la température de la réaction. La gamme de température de réaction à la pression atmosphérique est de 50 à 90°C. La réaction étant fortement exothermique, le maintien de cette température est délicat et peut conduire à une réaction secondaire selon :

*2HBr* + *H*₂*SO*₄ *→ Br*₂ + *SO*₂ + *2H*₂*O* (4)

De même, le bisulfite de sodium formé dans la réaction (3) peut également se dégrader thermiquement en pyrosulfate de sodium selon :

2*NaHSO*₄ *→ Na*₂*S*₂*O*₇ + *H*₂*O* (5)

La réaction (3) peut donc conduire à des réactions secondaires qui « polluent » soit l'acide bromhydrique formé soit le bisulfite de sodium. Au-delà de la contamination des produits finis, se pose également le problème des débouchés commerciaux, notamment en ce qui concerne le bisulfite de sodium, utilisé dans le traitement d'eau ainsi que dans l'industrie alimentaire.

La conversion des anions en leur acide correspondant a de multiples applications :
- Conversion glutamate/acide glutamique (Wang, Sep. Purif. Technol., 2011, 79, 103-113) ;
- Traitement du glyphosate (Wang, 2012) ;
- Désalinisation d'eau de surface ou d'eau de mer (Ibanez, 2013) ;
- Traitement d'eau de rejet (Badruzzaman, 2009).

Ces applications portent également sur le traitement d'effluents industriels : on citera notamment l'étude de Y.X. Wang (Wang, Sep. Purif. Technol., 2011, 80, 196-201) portant sur la synthèse, en particulier la régénération d'acide bromhydrique à partir d'un effluent issu de la bromation de caoutchouc, au moyen d'électrodialyse à membranes bipolaires. Cette étude émet des réserves quant à l'applicabilité du procédé du fait de la présence d'impuretés dans l'effluent à traiter.

La demande de brevet US3752883 décrit un procédé de production d'acide bromhydrique à partir d'une saumure naturelle issue de la mer morte. Cette demande de brevet porte sur une conversion directe des sels de bromures en acide bromhydrique au cours d'un procédé thermique sur lit fluidisé de silice en milieu réducteur avec éventuellement une co-injection de sulfure d'hydrogène.

### Présentation de l'invention

L'invention a pour but de développer un procédé de préparation d'acide bromhydrique de qualité technique industrielle à partir de déchets à base de solution aqueuse de sels de bromures comprenant des contaminants organiques, notamment à partir d'effluents industriels très pollués en termes de pollution organique. Un autre but de l'invention est de valoriser les ions bromures contenus dans des déchets industriels en les convertissant en acide bromhydrique.

Les principaux objectifs de l'invention sont de purifier préalablement les déchets à traiter afin d'éliminer les contaminants organiques et de les traiter ultérieurement en vue de l'obtention directe d'acide bromhydrique de qualité technique industrielle sans passer par l'étape de synthèse du brome. L'invention vise ainsi à éviter tout risque industriel lié au stockage du brome et du chlore. En substituant les ressources naturelles par des déchets industriels, l'invention vise également à obéir au principe de l'économie circulaire en faisant des économies en terme de ressource, de rejet et de consommation électrique.

### Résumé de l'invention

L'invention est définie par les revendications indépendantes. Les revendications dépendantes définissent des modes de réalisation préférés de l'invention.

Selon un premier aspect, l'invention concerne un procédé de préparation d'acide bromhydrique à partir de déchets à base de solution aqueuse de sels de bromures comprenant des contaminants organiques, ledit procédé comprenant notamment les étapes de:
- purification thermique desdits déchets ;
- synthèse d'acide bromhydrique brut ;
- purification par distillation de l'acide bromhydrique brut.

Selon un second aspect, l'invention concerne l'utilisation du procédé de préparation selon l'invention pour l'obtention directe d'acide bromhydrique à partir de déchets à base de solution aqueuse de sels de bromures comprenant des contaminants organiques.

Selon un troisième aspect, l'invention concerne l'utilisation du procédé de préparation selon l'invention pour la valorisation des ions bromures par leur conversion en acide bromhydrique.

### Brève description des figures

Figure 1 est un schéma de fonctionnement initial (hors revalorisation) du Four Statique.
Figure 2 est un schéma de fonctionnement du Four Statique en mode régénération-valorisation.
Figure 3 est un dispositif d'électrodialyse bipolaire à trois compartiments.
Figure 4 est une évolution du rapport acide bromhydrique sur brome total en fonction des lots d'électrodialyse et concentration molaire du brome total (colonne de gauche pour chaque lot) et du brome sous forme acide (HBr) (colonne de droite pour chaque lot).
Figure 5 est une évolution du rapport acide bromhydrique sur brome total avec le volume de déchets passé sur la colonne de résines échangeuses d'ions et pourcentage massique du brome total (colonne de gauche pour chaque lot) et du brome sous forme HBr (colonne de droite pour chaque lot) dans les aliquotes récoltées.

### Description détaillée de l'invention

L'invention concerne un procédé de préparation d'acide bromhydrique à partir de déchets à base de solution aqueuse de sels de bromures comprenant des contaminants organiques, ledit procédé comprenant les étapes suivantes:
a. une étape de purification thermique par incinération des déchets afin d'éliminer les contaminants organiques, suivie d'une étape de concentration des déchets par piégeage dans une trempe (un Quench) constitué(e) d'un rideau d'eau circulaire concentrique ;
b. une étape d'électrodialyse à membranes bipolaires, ou de traitement par une résine échangeuse d'ions, des déchets obtenus à l'issue de l'étape a. afin de convertir les sels de bromures en acide bromhydrique ;
c. une étape de purification par une première distillation de l'acide bromhydrique obtenu à l'issue de l'étape b. afin d'éliminer l'eau et l'acide chlorhydrique excédentaires ;
d. une étape de purification par une deuxième distillation azéotropique de l'acide bromhydrique obtenu à l'issue de l'étape c. afin de réduire la teneur en résidus secs, métaux lourds et/ou sels dissous; et
e. une étape de récupération de l'acide bromhydrique obtenu à l'issue de l'étape d.

Dans le contexte de l'invention, les déchets correspondent à des déchets industriels. Le terme « déchets à base de solution aqueuse de sels de bromures » peut être interchangé avec le terme « saumures bromurées ».

Dans un mode de réalisation particulier de l'invention, les déchets sont issus d'étapes de lavage, en particulier de lavage à l'eau, lors de réactions de synthèse organique utilisant des réactifs organo-bromés.

En effet, dans le domaine de la chimie du brome, les réactions de synthèses de molécules organiques s'accompagnent souvent d'une étape de lavage à l'eau afin d'extraire les sels de bromures du milieu réactionnel. Cette étape de lavage conduit à un déchet aqueux, riche en ions bromures, et contaminé en substances organiques.

Dans le contexte de l'invention, le terme « sels de bromures » inclut les bromures alcalins (NaBr, KBr, LiBr), les bromures d'ammonium (NH₄Br) et les bromures métalliques.

Dans un mode de réalisation particulier de l'invention, les déchets sont des effluents industriels.

Dans le contexte de l'invention, le terme « effluents industriels » fait référence à des solutions aqueuses bromurées issues de processus de réaction chimique mettant en œuvre des réactifs bromés.

Dans un mode de réalisation particulier de l'invention, les déchets à traiter ont une concentration en ions bromures comprise entre 5% et 35%, de préférence de 35% par rapport au poids brut total des déchets à traiter. Il s'agit d'un pourcentage massique.

Le procédé selon l'invention est donc applicable à des déchets ayant des teneurs faibles ou fortes en ions bromures.

Toute référence à des intervalles de valeurs dans la description et/ou les revendications implique, sauf mention contraire, que les bornes des intervalles sont incluses.

Dans un mode de réalisation particulier de l'invention, les contaminants organiques sont des alcools, des acides organiques, des cétones, des aldéhydes, des amides, des phénols, des aminés, des hydrocarbures linéaires ou cycliques, des acides aminés ou de façon plus générale toute substance contenant du carbone organique thermiquement dégradable.

De préférence, les contaminants organiques sont choisis dans le groupe constitué par de l'éthoxyéthanol, des hydrocarbures, par exemple du toluène, de la tributylamine, de l'acétone, de l'isopropanol, du sel de potassium du sulfate de méthyle, du butyronitrile, de l'ammoniaque, du triazole, de la N-méthyl-2-pyrrolidone et de la méthylisobutylcétone.

Dans un mode de réalisation particulier de l'invention, la teneur en contaminants organiques des déchets à traiter est comprise entre 0,1% et 10% par rapport au poids brut total des déchets à traiter. Il s'agit d'un pourcentage massique.

Dans un mode de réalisation particulier de l'invention, l'étape de purification thermique par incinération a. est effectuée au moyen d'un incinérateur de déchets industriels dangereux. Dans un mode de réalisation particulier de l'invention, la température de l'incinérateur est comprise entre 850°C et 1000°C, de préférence entre 900°C et 950°C, de manière plus préférée est de 930°C, et le temps de séjour dans l'incinérateur est compris entre 2,5 secondes et 5 secondes.

Dans le contexte de l'invention, le terme « incinération » fait référence à tout type de procédé mettant en œuvre une dégradation thermique de substances organiques ou inorganiques. Cette étape de purification thermique peut être effectuée au moyen de tout incinérateur de déchets industriels dangereux classiquement utilisé par l'homme du métier. De préférence, l'incinérateur de déchets industriels dangereux est un Four Statique.

En 1995, la technologie mise en place sur le Four Statique permettait de produire de l'acide chlorhydrique à partir de la combustion de polychlorobiphényle (PCB). Cette technologie se basait sur la captation de l'acide chlorhydrique formé par la combustion du PCB et son piégeage et sa concentration dans la première étape de traitement de fumée que constitue la trempe. Ce procédé permettait de produire un acide chlorhydrique de qualité technique dont les spécifications étaient les suivantes : HCl 20 % (m/m), métaux < 10 ppm, PCB < limite de détection.

Dans la présente invention, cette technologie a été adaptée à la récupération des sels de bromures contenus dans des déchets dont le comportement dans le four se base sur un transport de particules solides vers la trempe contrairement à l'acide chlorhydrique formé dans la combustion de PCB qui, lui, était véhiculé sous forme gazeuse. Lors de la combustion des saumures bromurées, le contenu organique de ces dernières est essentiellement ou totalement éliminé, ce qui constitue la base du processus de purification. Parallèlement au processus de purification thermique, le procédé de préparation nécessite également un processus de concentration des sels piégés dans la trempe. La maîtrise de la concentration est rendue possible par la gestion thermique des purges/apports d'eau au sein de la trempe. Cette étape de purification thermique permet d'éliminer les contaminants organiques. A l'issue de l'étape a., une analyse GC/MS d'un extrait au dichlorométhane selon la norme XP X30-489 est effectuée afin de vérifier l'absence de composés organiques.

Dans un mode de réalisation particulier de l'invention, les déchets obtenus à l'issue de l'étape a., *i.e.* les déchets purifiés et concentrés à l'issue de l'étape a., ont une concentration en ions bromures comprise entre 20% et 30% en poids, de préférence de 30% en poids par rapport au poids brut total des déchets obtenus à l'issue de l'étape a. Il s'agit d'un pourcentage massique.

Dans un mode de réalisation particulier de l'invention, les déchets obtenus à l'issue de l'étape a., *i.e.* les déchets purifiés et concentrés à l'issue de l'étape a., sont partiellement récupérés et utilisés comme matières premières pour la réaction de synthèse du brome. Dans cette configuration, une partie du flux des déchets obtenus à l'issue de l'étape a., par exemple entre 15% et 30%, est utilisée en vue d'une synthèse du brome, et une autre partie du flux des déchets obtenus à l'issue de l'étape a., par exemple entre 15% et 30%, est utilisée en vue de la synthèse de l'acide bromhydrique.

Dans un mode de réalisation particulier de l'invention, l'étape b. est une étape d'électrodialyse à membranes bipolaires et est effectuée dans un dispositif constitué d'au moins deux compartiments et d'au moins deux membranes bipolaires, ledit dispositif contenant en outre au moins une membrane anionique. De préférence, ledit dispositif est un dispositif d'électrodialyse à membranes bipolaires à deux compartiments ou un dispositif d'électrodialyse à membranes bipolaires à trois compartiments.

L'électrodialyse à membranes bipolaires utilisé dans la présente invention permet de produire de l'acide bromhydrique au moyen d'un transfert du compartiment contenant les déchets à base de solution aqueuse de sels de bromures vers un compartiment acide *via* une membrane anionique.

Le choix entre un dispositif d'électrodialyse à membranes bipolaires à deux compartiments ou un dispositif d'électrodialyse à membranes bipolaires à trois compartiments dépend de l'utilisation finale du mélange de bases (potasse ou soude). Un dispositif d'électrodialyse à membranes bipolaires à deux compartiments peut être utilisé si l'utilisation de base (potasse ou soude) polluée en sels n'est pas gênante en terme de traitement d'eau. Par contre, lorsque la production d'un mélange de base (potasse ou soude) pure est souhaitée, par exemple dans le cadre d'une revente ultérieure, le dispositif d'électrodialyse à membranes bipolaires à trois compartiments est préféré.

Le dispositif d'électrodialyse à membranes bipolaires à trois compartiments est par exemple constitué de sept cellules constituées chacune par une membrane anionique, une membrane cationique et une membrane bipolaire.

Dans un mode de réalisation particulier de l'invention, à l'étape b., l'électrodialyse à membranes bipolaires est remplacée par une étape de séparation chromatographique. De préférence, l'étape b. est une étape de traitement par une résine échangeuse d'ions, par exemple une résine sulfonique acide ou une résine cationique Applexion XA.

Ainsi, l'invention concerne un procédé de préparation d'acide bromhydrique à partir de déchets à base de solution aqueuse de sels de bromures comprenant des contaminants organiques, ledit procédé comprenant les étapes suivantes:
a. une étape de purification thermique par incinération des déchets afin d'éliminer les contaminants organiques, suivie d'une étape de concentration des déchets par piégeage dans une trempe constituée d'un rideau d'eau circulaire concentrique ;
b. une étape de traitement des déchets obtenus à l'issue de l'étape a. sur une résine échangeuse d'ions afin de convertir les sels de bromures en acide bromhydrique ;
c. une étape de purification par une première distillation de l'acide bromhydrique obtenu à l'issue de l'étape b. afin d'éliminer l'eau et l'acide chlorhydrique excédentaires ;
d. une étape de purification par une deuxième distillation azéotropique de l'acide bromhydrique obtenu à l'issue de l'étape c. afin de réduire la teneur en résidus secs, métaux lourds et/ou sels dissous; et
e. une étape de récupération de l'acide bromhydrique obtenu à l'issue de l'étape d. Dans un mode de réalisation particulier des procédés de préparation d'acide bromhydrique de l'invention, à l'étape c., l'eau excédentaire est éliminée en tête de distillation à une température de 100°C, l'acide chlorhydrique excédentaire est éliminé en tête de distillation à une température de 110°C, et l'acide bromhydrique est récupéré en pied de distillation.

Dans l'étape d. du procédé de préparation selon l'invention, l'acide bromhydrique est récupéré en tête de distillation à une température comprise entre 122°C et 124°C.

Dans un mode de réalisation particulier de l'invention, l'acide bromhydrique récupéré à l'issue de l'étape e. a une concentration comprise entre 48% et 50% en poids massique, de préférence égale à 48% en poids massique.

L'acide bromhydrique récupéré à l'issue de l'étape e. est de qualité technique industrielle. Dans le contexte de l'invention, le terme « de qualité technique industrielle » signifie que l'acide bromhydrique récupéré est conforme aux spécifications industrielles en termes de concentration et contamination résiduelle, par exemple en termes de composition [teneur de l'acide bromhydrique (mesurée *par* fluorescence X et titration acide), teneur en chlorures (mesurée par chromatographie ionique), teneur en fer (mesurée par ICP), teneur en métaux lourds (mesurée par ICP), teneur en As (mesurée par ICP), teneur en résidus secs (mesurée *via* chauffage par four à moufle et pesée), teneur en brome libre (mesurée par test colorimétrique), teneur en sulfates (mesurée par chromatographie ionique)], densité (mesurée à l'aide d'un densimètre), couleur (indice de coloration APHA, appréciation visuelle). L'invention concerne également l'utilisation du procédé de préparation selon l'invention pour l'obtention directe d'acide bromhydrique à partir de déchets à base de solution aqueuse de sels de bromures comprenant des contaminants organiques. Les ions bromures contenus dans les déchets sont directement utilisés pour obtenir de l'acide bromhydrique sans passer par l'étape de synthèse du brome. Contrairement aux procédés classiques, le procédé selon l'invention évite le stockage du brome, du chlore ainsi qu'un prélèvement important en eau suivi d'un rejet équivalent en eau polluée.

L'invention concerne également l'utilisation du procédé de préparation selon l'invention pour la valorisation des ions bromures par leur conversion en acide bromhydrique. L'acide bromhydrique ainsi formé peut être utilisé dans diverses réactions de synthèse organique ou minérale.

### Exemples

### Exemple 1. Typologie des déchets à base de solution aqueuse de sels de bromures comprenant des contaminants organiques (déchets à traiter)

Le Tableau 1 ci-dessous indique les principales caractéristiques physico-chimiques de différents déchets utilisés dans le procédé de préparation selon l'invention.

**Tableau 1**

| | | Référence Déchet | | | | | |
|---|---|---|---|---|---|---|---|
| | Unité | 1 | 2 | 3 | 4 | 5 | 6 |
| Bromure | % | 27 - 33 | 21 - 26 | 9 - 11 | 18 - 22 | 26 - 32 | 13 - 16 |
| Azote total | mg/l | 168 - 205 | 4897 - 5986 | <20 | 1161 - 1420 | 10053 - 12287 | 6823 - 8340 |
| Phosphore | mg/l | 1,26 - 1,54 | 10 - 13 | 2 - 3 | <0,8 | <0,8 | 1 - 2 |
| Fer | mg/l | 0 - 0 | 3 - 4 | 0 - 1 | <0,8 | <0,8 | 1,65 - 2 |
| Calcium | mg/l | <0,8 | 151-184 | <0,26 | <20 | <10 | 56 - 69 |
| Magnésium | mg/l | 1,17-1,43 | 0 - 1 | 1 - 1,3 | 1,5 - 1,9 | <0,8 | 1,5 - 1,9 |
| Somme métaux | mg/l | 4 - 5 | 5 - 7 | 3,78-4,62 | 4,5 - 6,71 | 3 - 4,84 | 3 - 4,62 |
| Sulfate | g/l | <0,3 | <0,3 | <0,3 | <0,3 | <0,3 | 1 - 2,42 |
| Ammonium | mg/l | <5 | 264 - 323 | <2,5 | 979 - 1196 | 14630 - 17881 | 57 - 70 |
| Somme halogène organique | % | <0,03 | <0,03 | <0,02 | <0,03 | <0,09 | 0,117 - 0,143 |
| Fluor minéral | mg/l | 0,67-0,81 | 1,89-2,31 | 1,08-1,32 | 0,27-0,33 | 0,54 - 0,66 | 5,22 - 6,38 |
| COT | % | 0,72-0,88 | 3,6-4,4 | 2,97-3,63 | 0,72-0,88 | 0,81 - 0,99 | 0,9 - 1,1 |

Le Tableau 2 ci-dessous indique les contaminants organiques présents dans ces déchets.

**Tableau 2**

| Déchet | Nature de la pollution organique | CAS | (%) |
|---|---|---|---|
| Déchet 1 | Tributylamine | 102-82-9 | 0,8 |
| Déchet 2 | Tributylamine | 102-89-9 | 3,8 |
| | Sel de potassium du sulfate de méthyle | 562-54-9 | 0,7 |
| Déchet 3 | Isopropanol | 67-63-0 | 3,3 |
| Déchet 4 | Butyronitrile | 109-74-0 | 0,5 |
| Déchet 5 | Isopropanol | 67-63-0 | 0,5 |
| | Toluène | 108-88-3 | 2 |
| | Ammoniaque | 7664-44-7 | 2 |
| Déchet 6 | Isopropanol | 67-63-0 | 3,7 |
| | Triazole | 288-88-0 | 3 |
| | N-Méthyl-2-pyrrolidone | 872-50-4 | 0,1 |
| | Méthylisobutylcétone | 108-10-1 | 0,5 |

### Exemple 2. Purification thermique

L'étape de purification thermique selon l'invention peut être réalisée selon un fonctionnement classique ou un fonctionnement avec recyclage sur la boucle de la trempe. Cette étape de purification thermique a été effectuée au moyen d'un Four Statique, qui est un incinérateur de déchets industriels dangereux.

Les conditions de fonctionnement de ce Four Statique étaient les suivantes :
- Débit de déchets à base de solution aqueuse de sels de bromures: 1 à 2 t/h, préférentiellement 1,3 t/h ;
- Température de fonctionnement : 85 °C à 1200 °C, préférentiellement 930 °C ;
- Temps de séjour : 2 à 5 sec, préférentiellement 3,4 sec.

### - Fonctionnement classique

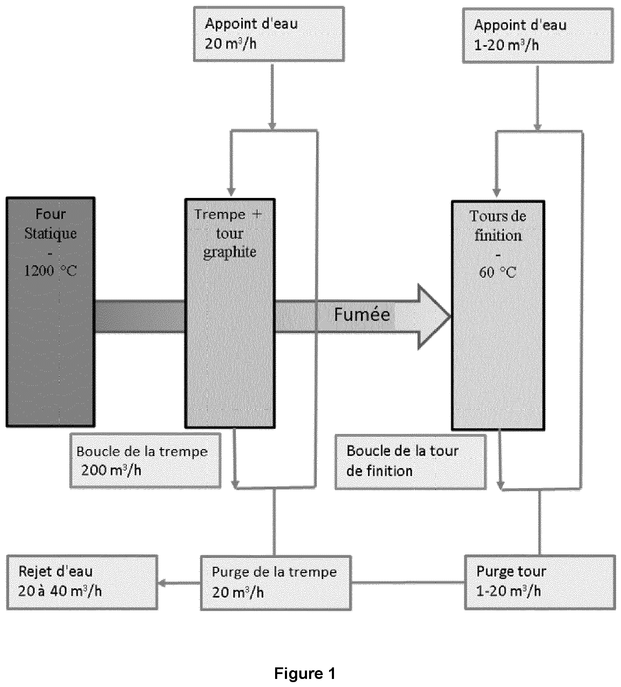

Le procédé de fonctionnement classique (hors régénération-valorisation) du Four Statique, qui n'est pas selon l'invention, est représenté dans la Figure 1. Dans ce mode de fonctionnement, la température de la trempe était gérée par purge et appoint d'eau afin de maintenir la température ainsi que le niveau du bac d'alimentation de la trempe à un niveau constant. Les purges de la trempe et de la tour de lavage étaient ensuite dirigées vers le traitement d'eau afin de neutraliser, avant leur rejet, les acides piégés. Dans cette configuration, la purge de la trempe était maintenue à 20 m³/h afin de maîtriser le flux enthalpique de sortie de four. La purge de la tour de finition dépendait quant à elle du flux d'halogènes à l'entrée du four. Le niveau de purge était défini en fonction du flux résiduel d'acide issu de la trempe afin de maintenir la fraction massique en acide dans la boucle des tours de finition et donc sa tension de vapeur à un niveau en deçà des valeurs réglementaires. Ce mode de fonctionnement nécessitait donc un apport d'eau de 20 à 40 m³/h et générait un flux de l'ordre de 20 à 40 m³/h d'eau de rejet chargée en halogénures. Ce mode de fonctionnement classique était très consommateur en eau et aboutissait à des solutions très diluées, de l'ordre de 3%. De ce fait, les inventeurs se sont tournés vers un autre mode de fonctionnement, en mode régénération-valorisation.

### - Fonctionnement avec recyclage sur la boucle de la trempe

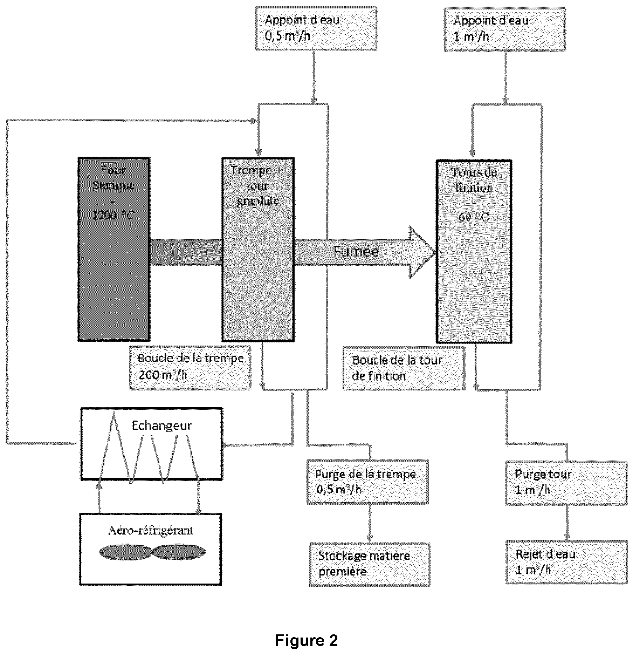

Le procédé de fonctionnement du Four Statique en mode régénération-valorisation est représenté dans la Figure 2.

L'étape de recyclage sur la boucle de la trempe repose sur la gestion de deux contraintes :
- une contrainte thermique permettant d'absorber la puissance développée par la combustion ;
- une contrainte matière visant à limiter la concentration en espèces piégées dans le but de maîtriser la tension de vapeur à la sortie de la trempe, cette tension de vapeur conditionnant les capacités des laveurs de finition, et permettant d'éviter la saturation (annulation de l'échange gaz/liquide) et la précipitation des espèces piégées.

Dans cette configuration, l'énergie thermique issue du four était gérée par un échangeur de chaleur dont le circuit de refroidissement était lui-même refroidi par un aéro-réfrigérant. Ce système permettait de fonctionner sans apport d'eau de refroidissement. Le bilan matière à volume d'eau constant permettait d'augmenter les concentrations en espèces piégées dans la trempe. Le niveau de purge était donc régulé en fonction de la concentration limite recherchée. Industriellement, cette régulation se basait sur les indications d'un densimètre en ligne. Dans ce cas de figure, la purge de la trempe n'était plus dirigée vers le traitement d'eau mais vers un stockage au même titre qu'une matière première commercialisée. Concernant la tour de lavage de finition, les niveaux de purge et d'appoint étaient de l'ordre de 1 m³/h.

Ce système a permis de faire une économie de ressources en eau et une diminution des rejets tant en eau qu'en sels. Cette diminution d'impact a été également accompagnée d'une création de matière première. Ce système a abouti à des solutions plus concentrées, de l'ordre de 20-30%.

Après avoir effectué l'étape a. de purification thermique et de concentration des déchets selon le procédé de préparation de l'invention, les déchets purifiés, notamment en terme de pollution organique, et concentrés avaient les caractéristiques physico-chimiques indiquées dans le Tableau 3 ci-dessous.

**Tableau 3**

| | Unité | Spécifications |
|---|---|---|
| pH | | neutre à basique |
| Densité | | 1,2 |
| Elément chimique (Brome) | % | >15 |
| Azote total | mg/l | <220 |
| Phosphore | mg/l | <100 |
| Fe | mg/l | <200 |
| Ca | mg/l | <300 |
| Mg | mg/l | 30 |
| Al | mg/l | 20 |
| Somme des Métaux Lourds (As, Cd, Co, Cr, Cu, Hg, Mg, Mn, Ni, Pb, Sb, Sn, Zn) | mg/l | <10 |
| Sulfates (exprimés en ions sulfates) | g/l | <5 |
| Ammonium (exprimé en ions ammonium) | mg/l | <50 |
| COT | mg/l | <200 |
| Fluor Minéral | % | <20 |

### Exemple 3. Synthèse d'acide bromhydrique

Dans le cadre de la présente invention, les inventeurs avaient pour but d'obtenir de l'acide bromhydrique ayant les spécifications mentionnées dans le Tableau 4 ci-dessous.

**Tableau 4**

| | Spécification | Unité |
|---|---|---|
| Densité | > 1,48 | g/ml |
| HBr | 48-50 | % |
| Chlorures | < 100 | ppm |
| Fer (en tant Fe₂O₃) | <2 | ppm |
| Métaux lourds (Pb) | <3 | ppm |
| As | <0,5 | ppm |
| Résidu sec | <100 | ppm |
| Brome libre | <75 | ppm |
| Sulfates | <10 | ppm |
| Indice de coloration APHA | <200 | |

Les voies de synthèse selon la réaction de Kubierschky ou par la voie sulfurique telles que décrites précédemment ayant été jugées trop difficiles à mettre en œuvre en terme d'autorisation administrative, notamment vis-à-vis des autorisations de stockage de chlore (Cl₂) et de brome (Br₂), les inventeurs se sont orientés vers des voies alternatives mettant en jeu des procédés de synthèse moins « dangereux ».

En particulier, deux voies de synthèse ont été explorées : la synthèse d'acide bromhydrique (a) *via* un procédé d'électrodialyse à membranes bipolaires (procédé membranaire) ou (b) *via* un procédé de résine échangeuse d'ions.

### (a) Synthèse d'acide bromhydrique via un procédé d'électrodialyse à membranes bipolaires

Le principe d'électrodialyse se base sur des membranes chargées en résine échangeuse d'ions. Ces résines sont soit chargées positivement, on parlera de membranes anioniques, soit chargées négativement, on parlera alors de membranes cationiques. Du fait de leur charge électrique, ces membranes autorisent spécifiquement soit le transfert d'un anion (au travers d'une membrane anionique) soit le transfert d'un cation (au travers d'une membrane cationique).

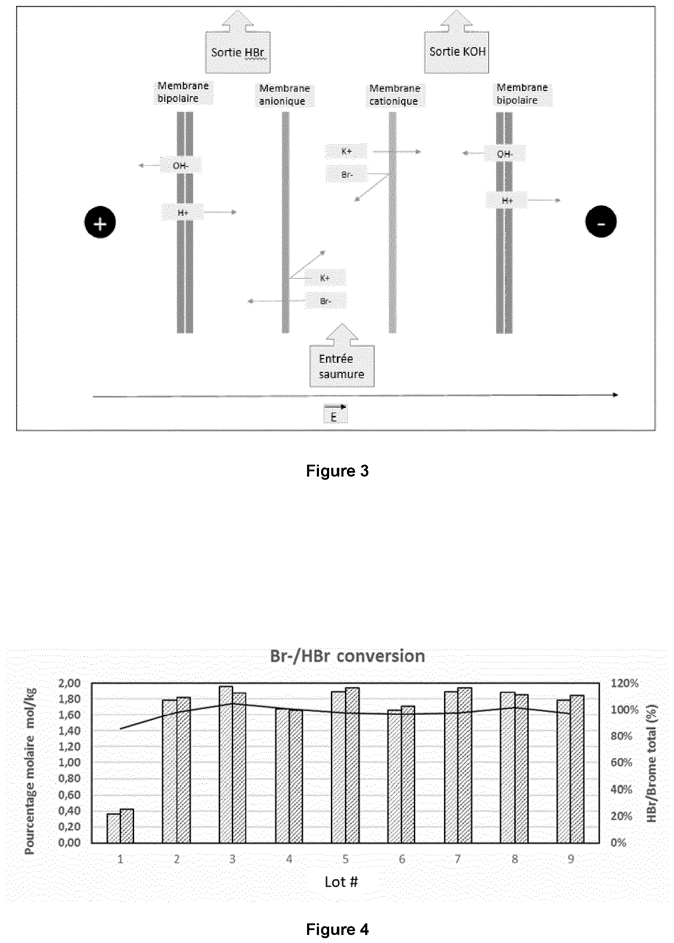

Les membranes bipolaires sont constituées d'une superposition de membrane cationiques et anioniques. Du fait de cette superposition, cette double membrane n'autorise aucun transfert de l'extérieur vers l'intérieur. Seul le transfert de l'intérieur vers l'extérieur est possible et notamment ceux des ions hydrogènes et hydroxydes issus de la dismutation de l'eau. L'ensemble de ce réacteur est donc constitué d'un empilement alternatif de ces membranes, le mouvement des ions étant contrôlé par un champ électrique au travers de cet empilement. Un exemple de dispositif d'électrodialyse bipolaire à trois compartiments pouvant être utilisé dans le cadre de la présente invention est illustré en Figure 3. Du fait de la sélectivité de transfert des membranes, l'ion bromure du déchet est converti en acide bromhydrique alors que son cation potassium ou sodium est converti en potasse ou en soude. A titre alternatif, cette configuration à trois compartiments peut être remplacée par une configuration à deux compartiments avec une seule membrane anionique.

### Essai pilote d'électrodialyse à membranes bipolaires

Les déchets obtenus à l'issue de l'étape a. du procédé selon l'invention ont été testés sur un pilote de laboratoire en vue d'une production d'acide bromhydrique.

Les caractéristiques techniques de l'empilement membranaire EUR2C7-Bip (Eurodia) utilisé sont représentées dans le Tableau 5 ci-dessous.

**Tableau 5**

| EUR2C7-Bip - Caractéristiques | |
|---|---|
| Nombre de cellules | 7 |
| Surface active / cellule | 0,02 m² |
| Anode | Nickel |
| Cathode | Nickel |

Huit lots de transfert ont été réalisés. L'ensemble de l'essai a porté sur 10 litres de déchets obtenus à l'issue de l'étape a. Les déchets obtenus à l'issue de l'étape a. ont été ajustés à 20% d'ions bromures et la durée du transfert a été de 14 heures. Pour chaque lot, la concentration molaire en ions bromures a été comparée avec la normalité des échantillons obtenus. La Figure 4 montre que les ions bromures ont été convertis en acide bromhydrique avec un taux de conversion de l'ordre de 100%. Le rendement de récupération de brome était de l'ordre de 90%, et le rendement faradique se situait entre 40 et 45%.

L'acide bromhydrique brut obtenu à l'issue de l'étape d'électrodialyse à membranes bipolaires (étape b. du procédé de préparation selon l'invention) présentait les caractéristiques chimiques décrites dans le Tableau 6 ci-dessous.

**Tableau 6**

| | HBr brut ou primaire (en tant que HBr 14,7%) | Unité |
|---|---|---|
| Densité | 1,11 | g/ml |
| HBr | 14,7 (en tant que HBr) | % |
| HCl | 1900 | ppm |
| Fer (en tant Fe₂O₃) | 0,69 | ppm |
| Métaux lourds (Pb) | 0,92 | ppm |
| As | <0,07 | ppm |
| Résidu sec | 1165 | ppm |
| Brome libre | <0,05 | ppm |
| Sulfates (H₂SO₄) | 205 | ppm |
| Indice de coloration APHA | - | |

Les inventeurs ont noté la présence d'acide chlorhydrique, de sulfates et de résidu sec au-delà des spécifications techniques exigées (voir Tableau 4). La présence d'acide chlorhydrique était liée au transfert des ions chlorures au même titre que les ions bromures. Ces résultats indiquaient la nécessité d'effectuer une étape additionnelle afin de purifier l'acide bromhydrique ainsi obtenu de manière à ce que celui-ci soit conforme aux spécifications techniques exigées.

### (b) Synthèse d'acide bromhydrique via un procédé de résine échangeuse d'ions

Dans le cadre de cette deuxième voie de synthèse, les résines échangeuses d'ions testées par les inventeurs étaient des résines sulfoniques.

Au contact des groupements sulfoniques préalablement protonés de la résine échangeuse d'ions, la réaction des ions bromures avec les protons hydrogènes de la résine est la suivante : *R ― SO*₃ *― H* + *K*⁺ + *Br^{―} → R ― SO*₃ *― K* + *H*⁺ + *Br^{―}*

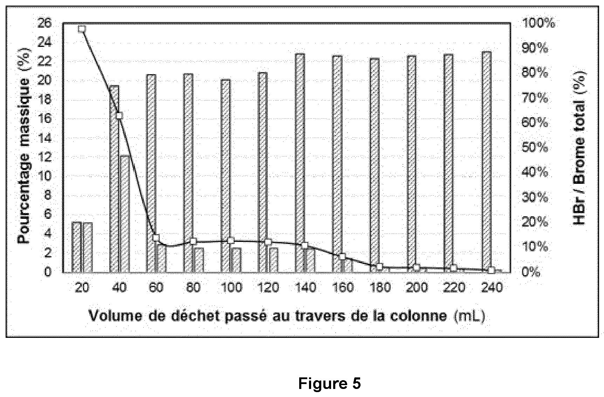

Des essais ont été conduits au stade laboratoire sur une colonne de 16 mm de diamètre garnie de 40 g de résine Dowex 50W-X8. Le conditionnement protonique a été réalisé par un lavage à l'acide chlorhydrique 1N. La fin de cette opération a été suivie par le pH du percolât acide (pH des eaux de percolation < 1). Ce conditionnement a été suivi d'une étape de rinçage à l'eau déminéralisée. Là encore, la fin de l'opération a été assurée par la lecture du pH (pH des eaux de percolation > 6). Le traitement des déchets obtenus à l'issue de l'étape a. du procédé de préparation selon l'invention a été opéré par ajout par incrément de 50 ml en tête de lit de colonne. Le percolât a été récupéré par aliquotes de 5 ml. Les aliquotes de 5 ml ont été regroupées sous une seule fraction de 20 ml. Ces différentes fractions ont été analysées en normalité acide (représentatif de l'acide bromhydrique) et en teneur en brome total par spectrométrie de fluorescence X à dispersion d'énergie. Ces deux données analytiques ont été converties en concentration massique, comme représenté dans la Figure 5.

Les inventeurs ont constaté qu'à l'exception de la première aliquote 0-20 ml pour laquelle la conversion ions bromures/acide bromhydrique est totale, les fractions suivantes ne présentaient qu'une conversion partielle. L'échange semblait contrôlé et limité par le transfert de matière, la conversion ions bromures/acide bromhydrique obéissant donc plus à un régime d'équilibre qu'à une réaction totale.

Cette voie de synthèse *via* un procédé de résine échangeuse d'ions (résine sulfonique acide) a donné des résultats probants sur les premières aliquotes. Les inventeurs poursuivent donc leurs recherches en utilisant d'autres types de résine ou de zéolite acide afin de mettre en œuvre cette approche à l'échelle industrielle. Cette deuxième voie de synthèse est avantageuse en termes de coût énergétique par rapport à l'utilisation du procédé d'électrodialyse à membranes bipolaires.

### Exemple 4. Production d'acide bromhydrique 48% par distillation

L'acide bromhydrique obtenu à l'issue de l'étape b. d'électrodialyse à membranes bipolaires du procédé selon l'invention (également appelé acide bromhydrique brut ou primaire) tel que décrit dans l'Exemple 3(a) a été concentré et purifié par distillation selon les étapes suivantes : 1. Distillation à 100 ° C: extraction de l'eau excédentaire ;

### 2. Distillation à 110 °C : extraction de l'acide chlorhydrique excédentaire ;

3. Evaporation et condensation de l'azéotrope HBr 48 %. Les étapes 1 et 2 (première distillation) ont été conduites en une seule étape, sur la même colonne à deux températures différentes. A l'issue de cette première étape, l'acide bromhydrique a été récupéré en pied de distillation. L'analyse chimique de l'acide bromhydrique obtenu suite à la première distillation (étapes 1 et 2) est représentée dans le Tableau 7 ci-dessous.

**Tableau 7**

| | HBr obtenu suite à la 1^{ère} distillation (étapes 1 et 2) | Unité |
|---|---|---|
| Densité | 1,47 | g/ml |
| HBr | 50,5 | % |
| Chlorures | <5 | ppm |
| Fer (en tant Fe₂O₃) | 6,3 | ppm |
| Métaux lourds (Pb) | 14,5 | ppm |
| As | <0,14 | ppm |
| Résidu sec | 6600 | ppm |
| Brome libre | <0,25 | ppm |
| Sulfates | 590 | ppm |
| Indice de coloration APHA | Orange | |

Ce Tableau 7 montre l'élimination de l'eau excédentaire par rapport au niveau azéotropique de l'acide bromhydrique (48-50%) ainsi que l'élimination de l'acide chlorhydrique.

L'étape 3 consistait en l'évaporation sous vide de l'azéotrope acide bromhydrique 48%. Cette étape 3 consistait en une deuxième distillation effectuée sur une deuxième colonne, l'azéotrope 48% étant récupéré en tête de distillation. L'analyse chimique de l'acide bromhydrique final obtenu suite à cette étape 3 est représentée dans le Tableau 8 ci-dessous.

**Tableau 8**

| | HBr obtenu suite à la 2^{ème} distillation (étape 3) | Spécifications exigées | Unité |
|---|---|---|---|
| Densité | 1,47 | >1,48 | g/ml |
| HBr | 49,7 | 48-49 ; 49-50 | % |
| Chlorures | <5 | <100; <700 | ppm |
| Fer (en tant Fe₂O₃) | <0,4 | <5 ; <2 | ppm |
| Métaux lourds (Pb) | 0,54 (Zn) | <3 | ppm |
| As | <0,14 | <0,5 | ppm |
| Résidu sec | 25-50 | <100 ; <300 | ppm |
| Brome libre | 0,25 | <75 | ppm |
| Sulfates | <1 | <10 | ppm |
| Indice de coloration APHA | Jaune pâle (<200) | <200 | |

### Conclusion

Le procédé de préparation d'acide bromhydrique selon l'invention porte sur l'ensemble des étapes suivantes: purification thermique de déchets à base de solution aqueuse de sels de bromures ; synthèse d'acide bromhydrique brut ; et purification par distillation de l'acide bromhydrique brut.

Cette nouvelle activité industrielle ouvre un champ nouveau dans la chimie du brome tant au niveau de la mise en évidence d'un nouveau gisement qu'aux niveaux des procédés de synthèse et de purification mis en œuvre.

La substitution des ressources naturelles par des déchets industriels obéit au principe de l'économie circulaire. Le Tableau 9 ci-dessous compare les économies en terme de ressource, de rejet et de consommation électrique entre un procédé classique et le procédé de préparation selon l'invention.

**Tableau 9**

| | Procédé classique | Procédé selon l'invention |
|---|---|---|
| Ressource en eau (t/t brome) | 25 000 | 3 |
| Rejet en eau (t/t brome) | 25 000 | 4 |
| Puissance électrique (MWh/t brome) | 80 | 1,4 |

Par ailleurs, le procédé de préparation d'acide bromhydrique selon l'invention vise l'obtention directe d'acide bromhydrique sans passer par l'étape de synthèse du brome, ce qui en terme de risques industriels, évite le stockage de brome et de chlore.

### Références

Wang et al, Sep. Purif. Technol., 2011, 79, 103-113 ;
Wang et al, Desalination, 2012, 300, 58-63 ;
Ibanez et al, Desalination, 2013, 309, 165-170 ;
Badruzzaman et al, J. Membr. Sci., 2009, 326, 392-399 ;
Wang et al., Sep. Purif. Technol., 2011, 80, 196-201.

## Revendications

1. Procédé de préparation d'acide bromhydrique à partir de déchets à base de solution aqueuse de sels de bromures comprenant des contaminants organiques, ledit procédé comprenant les étapes suivantes:
a. une étape de purification thermique par incinération des déchets afin d'éliminer les contaminants organiques, suivie d'une étape de concentration des déchets par piégeage dans une trempe constituée d'un rideau d'eau circulaire concentrique ;
b. une étape d'électrodialyse à membranes bipolaires, ou de traitement par une résine échangeuse d'ions, des déchets obtenus à l'issue de l'étape a. afin de convertir les sels de bromures en acide bromhydrique ;
c. une étape de purification par une première distillation de l'acide bromhydrique obtenu à l'issue de l'étape b. afin d'éliminer l'eau et l'acide chlorhydrique excédentaires ;
d. une étape de purification par une deuxième distillation azéotropique de l'acide bromhydrique obtenu à l'issue de l'étape c. afin de réduire la teneur en résidus secs, métaux lourds et/ou sels dissous; et
e. une étape de récupération de l'acide bromhydrique obtenu à l'issue de l'étape d.

2. Procédé selon la revendication 1, **caractérisé en ce que** les déchets sont issus d'étapes de lavage lors de réactions de synthèse organique utilisant des réactifs organo-bromés.

3. Procédé selon la revendication 1 ou 2, **caractérisé en ce que** les déchets sont des effluents industriels.

4. Procédé selon l'une quelconque des revendications 1 à 3, **caractérisé en ce que** les déchets à traiter ont une concentration en ions bromures comprise entre 5% et 35%, de préférence de 35% par rapport au poids brut total des déchets à traiter.

5. Procédé selon l'une quelconque des revendications 1 à 4, **caractérisé en ce que** les contaminants organiques sont choisis dans le groupe constitué par de l'éthoxyéthanol, des hydrocarbures, de la tributylamine, de l'acétone, de l'isopropanol, du sel de potassium du sulfate de méthyle, du butyronitrile, de l'ammoniaque, du triazole, de la N-méthyl-2-pyrrolidone et de la méthylisobutylcétone.

6. Procédé selon l'une quelconque des revendications 1 à 5, **caractérisé en ce que** la teneur en contaminants organiques des déchets à traiter est comprise entre 0,1% et 10% par rapport au poids brut total des déchets à traiter.

7. Procédé selon l'une quelconque des revendications 1 à 6, **caractérisé en ce que** l'étape de purification thermique par incinération a. est effectuée au moyen d'un incinérateur de déchets industriels dangereux.

8. Procédé selon la revendication 7, **caractérisé en ce que** la température de l'incinérateur est comprise entre 850°C et 1000°C, de préférence entre 900°C et 950°C, de manière plus préférée est de 930°C, et le temps de séjour dans l'incinérateur est compris entre 2,5 secondes et 5 secondes.

9. Procédé selon l'une quelconque des revendications 1 à 8, **caractérisé en ce que** les déchets obtenus à l'issue de l'étape a. ont une concentration en ions bromures comprise entre 20% et 30% en poids, de préférence de 30% en poids par rapport au poids brut total des déchets obtenus à l'issue de l'étape a.

10. Procédé selon l'une quelconque des revendications 1 à 9, **caractérisé en ce que** les déchets obtenus à l'issue de l'étape a. sont partiellement récupérés et utilisés comme matières premières pour la réaction de synthèse du brome.

11. Procédé selon l'une quelconque des revendications 1 à 10, **caractérisé en ce que** l'étape b. est une étape d'électrodialyse à membranes bipolaires et est effectuée dans un dispositif constitué d'au moins deux compartiments et d'au moins deux membranes bipolaires, ledit dispositif contenant en outre au moins une membrane anionique.

12. Procédé selon la revendication 11, **caractérisé en ce que** ledit dispositif est un dispositif d'électrodialyse à membranes bipolaires à deux compartiments ou un dispositif d'électrodialyse à membranes bipolaires à trois compartiments.

13. Procédé selon l'une quelconque des revendications 1 à 10, **caractérisé en ce que** l'étape b. est une étape de traitement par une résine échangeuse d'ions.

14. Procédé selon l'une quelconque des revendications 1 à 13, **caractérisé en ce qu'**à l'étape c., l'eau excédentaire est éliminée en tête de distillation à une température de 100°C, l'acide chlorhydrique excédentaire est éliminé en tête de distillation à une température de 110°C, et l'acide bromhydrique est récupéré en pied de distillation.

15. Procédé selon l'une quelconque des revendications 1 à 14, **caractérisé en ce qu'**à l'étape d., l'acide bromhydrique est récupéré en tête de distillation à une température comprise entre 122°C et 124°C.

16. Procédé selon l'une quelconque des revendications 1 à 15, **caractérisé en ce que** l'acide bromhydrique récupéré à l'issue de l'étape e. a une concentration comprise entre 48% et 50% en poids massique, de préférence égale à 48% en poids massique.

17. Utilisation du procédé selon l'une quelconque des revendications 1 à 16 pour l'obtention directe d'acide bromhydrique à partir de déchets à base de solution aqueuse de sels de bromures comprenant des contaminants organiques.

18. Utilisation du procédé selon l'une quelconque des revendications 1 à 16 pour la valorisation des ions bromures par leur conversion en acide bromhydrique.

## Patentansprüche

1. Verfahren zur Herstellung von Bromwasserstoffsäure aus Abfällen auf Basis wässriger Bromidsalzlösungen mit organischen Verunreinigungen, wobei das Verfahren die folgenden Schritte umfasst:
a. einen Schritt der thermischen Reinigung durch Verbrennung der Abfälle, um die organischen Verunreinigungen zu beseitigen, gefolgt von einem Schritt der Konzentration der Abfälle durch Ausfällen in einem Quench bestehend aus einem konzentrischen kreisförmigen Wasservorhang;
b. einen Schritt der Elektrodialyse mit bipolaren Membranen oder der Behandlung der am Ende von Schritt a. erhaltenen Abfälle mit einem Ionenaustauscherharz, um die Bromidsalze in Bromwasserstoffsäure umzuwandeln;
c. einen Schritt der Reinigung durch eine erste Destillation der am Ende von Schritt b. erhaltenen Bromwasserstoffsäure, um das überschüssige Wasser und die überschüssige Salzsäure zu entfernen;
d. einen Schritt der Reinigung der nach Schritt c. erhaltenen Bromwasserstoffsäure durch eine zweite azeotrope Destillation, um den Gehalt an Trockenrückständen, Schwermetallen und/oder gelösten Salzen zu verringern; und
e. einen Schritt der Rückgewinnung der am Ende von Schritt d. erhaltenen Bromwasserstoffsäure.

2. Verfahren nach Anspruch 1, **dadurch gekennzeichnet, dass** die Abfälle aus Waschschritten organischer Synthesereaktionen stammen, bei denen bromorganische Reagenzien benutzt werden.

3. Verfahren nach Anspruch 1 oder 2, **dadurch gekennzeichnet, dass** die Abfälle Industrieabwässer sind.

4. Verfahren nach einem der Ansprüche 1 bis 3, **dadurch gekennzeichnet, dass** die zu behandelnden Abfälle bezogen auf das Gesamtbruttogewicht der zu behandelnden Abfälle eine Bromidionenkonzentration zwischen 5 % und 35 %, vorzugsweise 35 %, haben.

5. Verfahren nach einem der Ansprüche 1 bis 4, **dadurch gekennzeichnet, dass** die organischen Verunreinigungen ausgewählt werden aus der Gruppe bestehend aus Ethoxyethanol, Kohlenwasserstoffen, Tributylamin, Aceton, Isopropanol, Kaliumsalz von Methylsulfat, Butyronitril, Ammoniak, Triazol, N-Methyl-2-pyrrolidon und Methylisobutylketon.

6. Verfahren nach einem der Ansprüche 1 bis 5, **dadurch gekennzeichnet, dass** der Gehalt an organischen Verunreinigungen in den zu behandelnden Abfällen bezogen auf das Gesamtbruttogewicht des zu behandelnden Abfalls zwischen 0,1 % und 10 % beträgt.

7. Verfahren nach einem der Ansprüche 1 bis 6, **dadurch gekennzeichnet, dass** Schritt a. der thermischen Reinigung durch Verbrennung mittels eines Verbrennungsofens für gefährliche Industrieabfälle durchgeführt wird.

8. Verfahren nach Anspruch 7, **dadurch gekennzeichnet, dass** die Temperatur des Verbrennungsofens zwischen 850°C und 1000°C, vorzugsweise zwischen 900°C und 950°C, und im Idealfall 930°C beträgt, und die Verweilzeit im Verbrennungsofen bei 2,5 Sekunden und 5 Sekunden liegt.

9. Verfahren nach einem der Ansprüche 1 bis 8, **dadurch gekennzeichnet, dass** die nach Ende von Schritt a. erhaltenen Abfälle bezogen auf das Gesamtbruttogewicht der nach Ende von Schritt a. erhaltenen Abfälle eine Bromidionenkonzentration zwischen 20 und 30 Gew.-%, vorzugsweise 30 Gew.-% haben.

10. Verfahren nach einem der Ansprüche 1 bis 9, **dadurch gekennzeichnet, dass** die nach Ende von Schritt a. erhaltenen Abfälle teilweise zurückgewonnen und als Rohmaterialien für die Synthesereaktion von Brom verwendet werden.

11. Verfahren nach einem der Ansprüche 1 bis 10, **dadurch gekennzeichnet, dass** Schritt b. eine Elektrodialyse mit bipolaren Membranen ist und in einer Vorrichtung durchgeführt wird, die aus mindestens zwei Kammern und mindestens zwei bipolaren Membranen besteht, wobei die Vorrichtung darüber hinaus mindestens eine anionische Membran enthält.

12. Verfahren nach Anspruch 11, **dadurch gekennzeichnet, dass** die Vorrichtung eine Elektrodialysevorrichtung 15 mit bipolaren Membranen und Zweikammerkonfiguration oder eine Elektrodialysevorrichtung mit bipolaren Membranen und Dreikammerkonfiguration ist.

13. Verfahren nach einem der Ansprüche 1 bis 10, **dadurch gekennzeichnet, dass** Schritt b. ein Schritt der Behandlung mit einem Ionenaustauschharz ist.

14. Verfahren nach einem der Ansprüche 1 bis 13, **dadurch gekennzeichnet, dass** in Schritt c. überschüssiges Wasser am Kopf der Destillation bei einer Temperatur von 100°C entfernt wird, die überschüssige Salzsäure am Kopf der Destillation bei einer Temperatur von 110°C entfernt und die Bromwasserstoffsäure am Boden der Destillation zurückgewonnen wird.

15. Verfahren nach einem der Ansprüche 1 bis 14, **dadurch gekennzeichnet, dass** in Schritt d. die Bromwasserstoffsäure am Kopf der Destillation bei einer Temperatur zwischen 122°C und 124°C zurückgewonnen wird.

16. Verfahren nach einem der Ansprüche 1 bis 15, **dadurch gekennzeichnet, dass** die am Ende von Schritt e. zurückgewonnene Bromwasserstoffsäure eine Konzentration zwischen 48 und 50 Gew.-%, vorzugsweise 48 Gew.-%, hat.

17. Verwendung des Verfahrens nach einem der Ansprüche 1 bis 16 zwecks direkter Gewinnung von Bromwasserstoffsäure aus Abfällen auf Basis organischer Bromidsalzlösungen mit organischen Verunreinigungen.

18. Verwendung des Verfahrens nach einem der Ansprüche 1 bis 16 zwecks Verwertung von Bromidionen durch deren Umwandlung in Bromwasserstoffsäure.

## Claims

1. A method for the preparation of hydrobromic acid from an aqueous bromide salt solution waste comprising organic contaminants, said process comprising the following steps:
a. a step consisting in thermal purification by incineration of the waste in order to remove organic contaminants, followed by a step consisting in concentrating the waste by trapping it in a quench consisting of a concentric circular water curtain;
b. a step consisting in electrodialysis with bipolar membranes, or treatment with an ion exchange resin, of the waste obtained on completion of step a. in order to convert the bromide salts into hydrobromic acid;
c. a step consisting in purification by a first distillation of the hydrobromic acid obtained on completion of step b. in order to eliminate the excess water and hydrochloric acid;
d. a step consisting in purification by a second azeotropic distillation of the hydrobromic acid obtained on completion of step c. in order to reduce the content of dry residues, heavy metals and/or dissolved salts; and
e. a step consisting in recovering the hydrobromic acid obtained on completion of step d.

2. A method according to claim 1, **characterised in that** the waste is derived from washing steps in organic synthesis reactions using organo-bromine reagents.

3. A method according to claim 1 or 2, **characterised in that** the waste is industrial effluent.

4. A method according to any one of claims 1 to 3, **characterized in that** the waste to be treated has a bromide ion concentration of between 5% and 35%, preferably 35%, based on the total gross weight of the waste to be treated.

5. A method according to any one of claims 1 to 4, **characterised in that** the organic contaminants are selected from the group consisting of ethoxyethanol, hydrocarbons, tributylamine, acetone, isopropanol, potassium salt of methyl sulphate, butyronitrile, ammonia, triazole, N-methyl-2-pyrrolidone and methylisobutylketone.

6. A method according to any one of claims 1 to 5, **characterised in that** the content of organic contaminants in the waste to be treated is between 0.1% and 10% based on the total gross weight of the waste to be treated.

7. A method according to any one of claims 1 to 6, **characterised in that** the step consisting in thermal purification by incineration a. is carried out by means of an incinerator for hazardous industrial waste.

8. A method according to claim 7, **characterised in that** the temperature of the incinerator is between 850°C and 1000°C, preferably between 900°C and 950°C, more preferably 930°C, and the retention time inside the incinerator is between 2.5 seconds and 5 seconds.

9. A method according to any one of claims 1 to 8, **characterized in that** the waste obtained on completion of step a. has a bromide ion concentration of between 20% and 30% by weight, preferably 30% by weight, based on the total gross weight of the waste obtained on completion of step a.

10. A method according to any one of claims 1 to 9, **characterised in that** the waste obtained at the end of step a. is partially recovered and used as raw materials for the bromine synthesis reaction.

11. A method according to any one of claims 1 to 10, **characterized in that** step b. is a bipolar membrane electrodialysis step and is carried out in a device consisting of at least two compartments and at least two bipolar membranes, said device further containing at least one anionic membrane.

12. A method according to claim 11, **characterised in that** said device is a two-compartment bipolar membrane electrodialysis device or a three-compartment bipolar membrane electrodialysis device.

13. A method according to any one of claims 1 to 10, **characterised in that** step b. is a step of treatment with an ion exchange resin.

14. A method according to any one of claims 1 to 13, **characterized in that**, at step c., excess water is removed at the top of the distillation at a temperature of 100°C, excess hydrochloric acid is removed at the top of the distillation at a temperature of 110°C, and hydrobromic acid is recovered at the bottom of the distillation.

15. A method according to any one of claims 1 to 14, **characterised in that**, at step d., hydrobromic acid is recovered at the top of the distillation at a temperature of between 122°C and 124°C.

16. A method according to any one of claims 1 to 15, **characterised in that** the hydrobromic acid recovered on completion of step e. has a concentration of between 48% and 50% by weight, preferably equal to 48% by weight.

17. Use of the method according to any one of claims 1 to 16 for the direct production of hydrobromic acid from waste based on an aqueous solution of bromide salts comprising organic contaminants.

18. Use of the method according to any one of claims 1 to 16 for the recovery of bromide ions by their conversion into hydrobromic acid.
